# EUROPEAN PATENT SPECIFICATION

(11) **EP 4 183 493 B1**
(45) Date of publication and mention of the grant of the patent: **09.10.2024**
(21) Application number: 22208049.1
(22) Date of filing: 17.11.2022
(51) Int. Cl.: B08B 1/20, B65H 23/192

(54) **TRANSPORT DEVICE, LIQUID EJECTING DEVICE**
TRANSPORTVORRICHTUNG, FLÜSSIGKEITSAUSSTOSSVORRICHTUNG
DISPOSITIF DE TRANSPORT, DISPOSITIF D'ÉJECTION DE LIQUIDE

(30) Priority: 19.11.2021 JP 2021188434
(43) Date of publication of application: 24.05.2023
(73) Proprietor: Seiko Epson Corporation, Tokyo 160-8801 (JP)
(72) Inventor: YAMAZAKI, Yusuke, Suwa-shi, 392-8502 (JP); BAN, Ryosuke, Suwa-shi, 392-8502 (JP); SHIMIZU, Sho, Suwa-shi, 392-8502 (JP); SASAKI, Tsuneyuki, Suwa-shi, 392-8502 (JP)
(74) Representative: Lewis Silkin LLP

(56) References cited:
- EP-A1- 2 783 876
- EP-A1- 3 378 661
- EP-A1- 3 403 835
- JP-U- S5 645 967

## Description

### BACKGROUND

### 1. Technical Field

The present disclosure relates to a transport device and a liquid ejecting device.

### 2. Related Art

In the past, as described in JP 2014-136625, a recording device has been known that includes a transport unit having a transporting belt for transporting an object to be transported, a recording unit for causing ink to be ejected onto the object to be transported, and a belt cleaning device for cleaning the transporting belt.

However, in the recording device described in JP 2014-136625 A, there is a problem that abnormality of the belt cleaning device cannot be appropriately detected.

EP 3378661 discloses a printing apparatus including a transport belt that is formed as a loop and capable of supporting a medium, a drive roller that rotates the transport belt and thereby transports the medium in a transport direction, a printing section that prints an image onto the medium, and a control section that controls a transport action for transporting the medium. In the printing apparatus, the transport belt extends around a plurality of rollers that include the drive roller, and the control section accepts input of belt tension that is a tension generated due to the transport belt extending around a plurality of the rollers. The tension is imparted to the transport belt. The control section controls the transport action in accordance with a correction table in which the belt tension and traveling rate of the transport belt corresponding to the belt tension correlate with each other.

### SUMMARY

A transport device according to the invention is defined in claim 1.

A liquid ejecting device according to the invention includes an ejecting unit configured to eject a liquid droplet onto a medium, and the transport device as described above configured to transport the medium.

### BRIEF DESCRIPTION OF THE DRAWINGS

FIG. 1 is a schematic view illustrating a configuration of a liquid ejecting device.
FIG. 2 is a schematic view illustrating a disposition example of sound collecting units.
FIG. 3 is a block diagram illustrating a control configuration of the liquid ejecting device.
FIG. 4 is a flowchart illustrating a control method of the liquid ejecting device.
FIG. 5 is a schematic view illustrating another disposition example of the sound collecting units.
FIG. 6 is a schematic view illustrating a yet another disposition example of the sound collecting units.
FIG. 7 is a schematic view illustrating a still another disposition example of the sound collecting units.
FIG. 8 is a schematic view illustrating a further another disposition example of the sound collecting units.
FIG. 9 is a schematic view illustrating a still further another disposition example of the sound collecting units.

### DESCRIPTION OF EXEMPLARY EMBODIMENTS

### 1. First Embodiment

First, a configuration of a liquid ejecting device 100 will be described. The liquid ejecting device 100 of the present embodiment is an ink jet-type textile printer that forms an image or the like on a medium M.

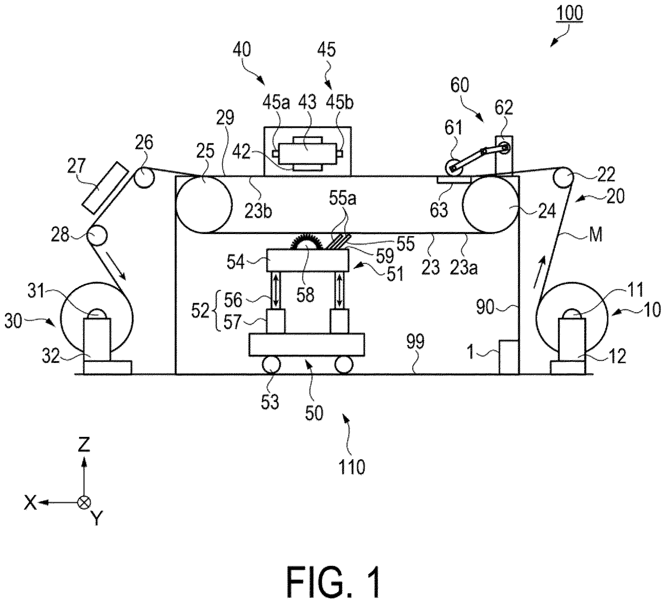

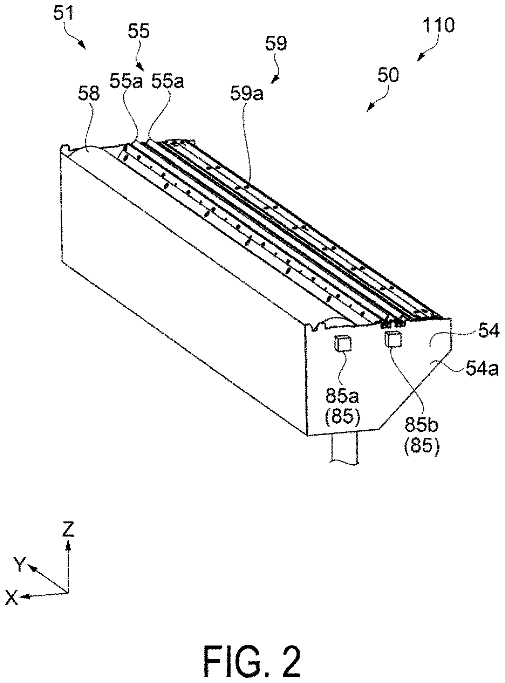

As illustrated in FIG. 1 and FIG. 2, the liquid ejecting device 100 includes a transport device 110 and an ejecting unit 40. The transport device 110 includes a medium transporting unit 20, a cleaning unit 50, and the like. Furthermore, the liquid ejecting device 100 includes a medium fitting part 60, a drying unit 27, and the like. The liquid ejecting device 100 includes a control unit 1 that controls each of the above units and the like. Each unit of the liquid ejecting device 100 and the like are attached to a frame portion 90.

The medium transporting unit 20 is configured to transport the medium M. The medium transporting unit 20 includes a medium supplying unit 10, a transporting roller 22, a transporting belt 23, a rotating roller 24, a driving roller 25, transporting rollers 26, 28, and a medium collecting part 30.

Note that in the present embodiment, each unit of the liquid ejecting device 100 will be described using an XYZ coordinate system in which an X-axis, a Y-axis, and a Z-axis are orthogonal to each other. A direction along the X-axis is defined as an X direction, a direction along the Y-axis as a Y direction, and a direction along the Z-axis as a Z direction. Further, a tip side of an arrow indicating a direction is defined as a + direction, and a base end side of the arrow indicating the direction is defined as a - direction. A direction in which gravity acts on the liquid ejecting device 100 is defined as a -Z direction, a direction along a direction in which the medium M is transported in the ejecting unit 40 is defined as the X direction, and a width direction of the medium M intersecting both the Z direction and the X direction is defined as the Y direction. Additionally, a positional relationship along a transport direction of the medium M or a movement direction of the transporting belt 23 is also referred to as "upstream side" or "downstream side".

The medium supplying unit 10 is configured to supply the medium M onto which an image is formed to the ejecting unit 40 side. For example, fabric such as cotton, wool, polyester, or the like is used as the medium M. The medium supplying unit 10 includes a feeding shaft part 11 and a bearing part 12. The feeding shaft part 11 is formed in a cylindrical shape or a columnar shape, and is provided rotatably in a circumferential direction. The medium M having a band shape is wound around the feeding shaft part 11 to form a roll shape. The feeding shaft part 11 is detachably attached to the bearing part 12. This allows the medium M being wound beforehand onto the feeding shaft part 11 to be attached to the bearing part 12 together with the feeding shaft part 11.

The bearing part 12 rotatably supports both ends in an axis direction of the feeding shaft part 11. The medium supplying unit 10 includes a rotation driver (not illustrated) configured to rotate and drive the feeding shaft part 11. The rotation driver rotates the feeding shaft part 11 in a direction in which the medium M is supplied. An operation of the rotation driver is controlled by the control unit 1. The transporting roller 22 relays the medium M from the medium supplying unit 10 to the transporting belt 23.

The transporting belt 23, which is held between at least two rollers for rotating the transporting belt 23, transports the medium M toward the transport direction (+X direction) with rotation and movement of the transporting belt 23. More specifically, the transporting belt 23, which is endlessly formed with the both end portions of a band-shaped belt being coupled to each other, is hung between two rollers of the rotating roller 24 and the driving roller 25. The transporting belt 23 is retained, with a predefined tension being acting, such that a portion between the rotating roller 24 and the driving roller 25 is held horizontal. A surface (support face) 23a of the transporting belt 23 is provided with an adhesive layer 29 onto which the medium M adheres. The transporting belt 23 supports (holds) the medium M supplied from the transporting roller 22 and fitted onto the adhesive layer 29 by the medium fitting part 60.

The rotating roller 24 and the driving roller 25 support a back surface 23b (an inner circumferential surface) of the transporting belt 23. Note that a configuration may be employed in which between the rotating roller 24 and the driving roller 25 is provided a support portion such as a roller for supporting the transporting belt 23.

Power is transmitted to the driving roller 25 directly or indirectly from a motor (not illustrated) configured to rotate and drive the driving roller 25. The driving roller 25 is provided downstream the ejecting unit 40 with respect to the transport direction of the medium M, while the rotating roller 24 is provided upstream the ejecting unit 40. When the driving roller 25 is rotated and driven, the transporting belt 23 rotates in association with the rotation of the driving roller 25, and the rotating roller 24 rotates in association with the rotation of the transporting belt 23. In association with the rotation of the transporting belt 23, the medium M supported by the transporting belt 23 is transported in the transporting direction, and an image is formed on the medium M by the ejecting unit 40.

In the present embodiment, the medium M is supported on a side (+Z direction side) where the surface 23a of the transporting belt 23 faces the ejecting unit 40, and the medium M is transported together with the transporting belt 23 from the rotating roller 24 side to the driving roller 25 side. While on the side where the surface 23a of the transporting belt 23 faces the cleaning unit 50 (-Z direction side), the transporting belt 23 alone is moved from the driving roller 25 side to the rotating roller 24 side. Note that description is made above on the transporting belt 23 including the adhesive layer 29 onto which the medium M is fitted, but the transporting belt 23 is not limited to this. For example, the transporting belt 23 may be of an electrostatic attraction type belt for attracting the medium M onto the belt with static electricity, or various adsorption force expression mechanisms such as vacuum suction and intermolecular force can be adopted.

The transporting roller 26 is configured to remove the medium M on which an image is formed from the adhesive layer 29 of the transporting belt 23. The transporting rollers 26 and 28 relay the medium M from the transporting belt 23 to the medium collecting part 30.

The medium collecting part 30 is configured to collect the medium M transported by the medium transporting unit 20. The medium collecting part 30 includes a winding shaft part 31 and a bearing part 32. The winding shaft part 31 is formed in a cylindrical shape or a columnar shape, and is provided rotatably in a circumferential direction. Around the winding shaft part 31, the medium M in a band-like shape is wound in a roll-like shape. The winding shaft part 31 is detachably attached to the bearing part 32. Thus, the medium M wound onto the winding shaft part 31 can be detached together with the winding shaft part 31.

The bearing part 32 rotatably supports both ends in an axis direction of the winding shaft part 31. The medium collecting part 30 includes a rotation driver (not illustrated) configured to rotate and drive the winding shaft part 31. The rotation driver rotates the winding shaft part 31 in a direction in which the medium M is wound. An operation of the rotation driver is controlled by the control unit 1.

The cleaning unit 50 is configured to clean the transporting belt 23 with a cleaning liquid as liquid. The cleaning unit 50 is disposed below the transporting belt 23, and between the rotating roller 24 and the driving roller 25 in the X direction. The cleaning unit 50 includes a cleaning section 51, an adjustment unit 52, and a moving section 53. The moving section 53 causes the cleaning unit 50 to be integrally moved in parallel with a floor surface 99 and then to be fixed at a predefined position.

The cleaning section 51 contacts the transporting belt 23 to clean the transporting belt 23. The cleaning section 51 cleans the surface 23a of the transporting belt 23 moving toward the rotating roller 24 from the driving roller 25 from below (the -Z direction).

The cleaning section 51 includes a storage tank 54, a rotary brush 58, and a wiper unit 55.

The storage tank 54 is a tank configured to store a cleaning liquid used to clean ink and foreign materials adhering onto the surface 23a of the transporting belt 23. The rotary brush 58 and the wiper unit 55 are provided inside the storage tank 54. As the cleaning liquid, for example, water or a water-soluble solvent (alcoholic aqueous solution or the like) may be used, and to which a surfactant agent and an antifoaming agent may be added as necessary.

The rotary brush 58 extends in the Y direction and is configured to be rotatable about a shaft. The rotary brush 58 is partially immersed in the cleaning liquid stored in the storage tank 54, and cleans the transporting belt 23 while rotating. Specifically, as the rotary brush 58 is rotated, the cleaning liquid is supplied onto the surface 23a of the transporting belt 23 and the rotary brush 58 and the transporting belt 23 slide each other. Thus, ink adhering onto the transporting belt 23, fiber of the medium M, and the like are removed by the rotary brush 58.

The wiper unit 55 includes at least one wiper blade 55a capable of wiping the cleaning liquid adhering to the transporting belt 23 by contacting the transporting belt 23. The wiper blade 55a is a plate member extending in the Y direction. The wiper blade 55a is formed of a flexible material such as silicon rubber. The wiper blade 55a is provided downstream the rotary brush 58 in the transport direction of the transporting belt 23. The transporting belt 23 and the wiper blade 55a slide against each other and thus, the cleaning liquid remaining on the surface 23a of the transporting belt 23 is removed. Note that, in the present embodiment, the two wiper blades 55a are provided, and the two wiper blades 55a are disposed at predetermined intervals in the X direction. Also, the two wiper blades 55a are disposed in a state of being inclined with respect to the X direction.

Further, the cleaning section 51 includes a blower unit 59. The blower unit 59 blows compressed air from an opening 59a toward the surface 23a of the transporting belt 23 (FIG. 2). In the present embodiment, a plurality of the openings 59a are disposed in the Y direction. The blower unit 59 is provided downstream the wiper blade 55a in the transport direction of the transporting belt 23. By blowing the compressed air toward the surface 23a of the transporting belt 23, the surface 23a of the transporting belt 23 can be dried.

The adjustment unit 52 is configured to be able to adjust a load exerted by the cleaning section 51 on the transporting belt 23, when the cleaning section 51 (the wiper blade 55a and the rotary brush 58) comes into contact with the transporting belt 23. The adjustment unit 52 of the present embodiment is a raising/lowering device constituted by an air cylinder 56 and a ball bushing 57, and supports the cleaning section 51 from below. Along with raising/lowering operation of the adjustment unit 52, it is possible to adjust a contact pressure with the transporting belt 23 of the cleaning section 51. Note that, in the present embodiment, the adjustment unit 52 raises or lowers the storage tank 54 together with the cleaning section 51, but the present disclosure is not limited thereto. For example, the adjustment unit may raise and lower only the cleaning section 51. Alternatively, the adjustment unit, while raising or lowering the rotary brush 58, may adjust the contact pressure with to the transporting belt 23 of the cleaning section 51 by changing an inclination of the wiper blade 55a.

Additionally, the transport device 110 of the present embodiment includes at least one sound collecting unit 85 (FIG. 2) described below.

Next, the medium fitting part 60, the ejecting unit 40, and the drying unit 27 provided along the medium transporting unit 20 will be described.

The medium fitting part 60 is configured to fit the medium M onto the transporting belt 23. The medium fitting part 60 is provided upstream (-X direction side) the ejecting unit 40. The medium fitting part 60 includes a press roller 61, a press roller driver 62, and a roller support part 63. The press roller 61 is formed in a cylindrical shape or a columnar shape, and is provided rotatably in a circumferential direction. The press roller 61 is rotatable about a shaft, and is disposed to have an axis direction intersecting the transport direction. The roller support part 63 is provided on the back surface 23b side of the transporting belt 23 facing the press roller 61 with the transporting belt 23 interposed between the roller support part 63 and the press roller 61.

The press roller driver 62 is configured to press the press roller 61 in the -Z direction side, to move the press roller 61 in the transport direction (+X direction), and a direction opposite to the transport direction (-X direction). The medium M superimposed on the transporting belt 23 is pressed onto the transporting belt 23 between the press roller 61 and the roller support part 63. This allows the medium M to be reliably affixed to the adhesive layer 29 provided on the surface 23a of the transporting belt 23, and to prevent the medium M from floating up over the transporting belt 23.

The ejecting unit 40 is disposed above (+Z direction side) the transporting belt 23, and is configured to execute printing (recording) onto the medium M supported on the surface 23a of the transporting belt 23. The ejecting unit 40 includes a head unit 42, a carriage 43 on which the head unit 42 is installed, a carriage moving unit 45 configured to move the carriage 43 in the width direction (Y direction) of the medium M intersecting the transport direction, and the like. The head unit 42 of the present embodiment includes a plurality of ejecting heads (not illustrated) that eject ink (for example, yellow, cyan, magenta, black, and the like), as liquid droplets, as liquid supplied from an ink supply unit (not illustrated) onto the medium M supported by the transporting belt 23.

The carriage moving unit 45 is provided above (+Z direction side) the transporting belt 23. The carriage moving unit 45 includes a pair of guide rails 45a and 45b extending along the Y direction. The head unit 42 is supported by the guide rails 45a and 45b in a state capable of reciprocating together with the carriage 43 in the Y direction.

The carriage moving unit 45 includes a moving mechanism (not illustrated) and a power source (not illustrated). As the moving mechanism, a mechanism including a combination of a ball screw and a ball nut, a linear guide mechanism, or the like may be employed. Further, the carriage moving unit 45 includes a motor (not illustrated) as a power source to move the carriage 43 along the guide rails 45a and 45b. As the motor, any kind of motors such as a stepping motor, a servo motor, and a linear motor can be adopted. When the motor is driven by control of the control unit 1, the head unit 42 moves together with the carriage 43 in the Y direction.

The drying unit 27 is provided between the transporting roller 26 and the transporting roller 28. The drying unit 27 is configured to dry ink ejected onto the medium M. The drying unit 27 includes, for example, an IR heater, and can drive the IR heater to dry ink ejected onto the medium M for a short period of time. Thus, the medium M having a band shape on which an image and the like are formed can be wound onto the winding shaft part 31.

Next, the sound collecting unit 85 will be described. The sound collecting unit 85 is, for example, a microphone, and collects a sound generated by operation of the cleaning unit 50. This allows detection of an abnormal sound at the time of malfunction of the cleaning unit 50. Then, by a detected abnormal sound, occurrence of a cleaning failure of the transporting belt 23 by the cleaning unit 50 can be detected. Furthermore, a loss of image quality on the medium M due to the cleaning failure of the transporting belt 23 can be reduced. Furthermore, by detecting occurrence of a cleaning failure by the cleaning unit 50, it is easy to adjust and repair the cleaning unit 50, and a downtime of the liquid ejecting device 100 can be reduced.

The sound collecting unit 85 of the present embodiment collects a sound generated from the cleaning section 51. This makes it possible to detect an abnormal sound caused by deterioration or the like of the cleaning section 51, and a reduction in cleaning performance for the transporting belt 23 by the cleaning section 51 can be suitably detected.

Specifically, as illustrated in FIG. 2, the sound collecting unit 85 is disposed at an outer surface 54a of the storage tank 54. The storage tank 54 is a box body that extends in the Y direction and has an opening on an upside and a bottom wall on a downside. That is, the sound collecting unit 85 is disposed on at least one of an end face in the +Y direction and an end face in the -Y direction of the storage tank 54. This makes it possible to prevent the sound collecting unit 85 from being wet by a cleaning liquid.

In addition, in the present embodiment, the two sound collecting units 85 (85a, 85b) are disposed on the end face in the -Y direction of the storage tank 54. The two sound collecting units 85a and 85b are disposed side by side in the X direction. Then, the sound collecting unit 85a on one side disposed in the +X direction of the two sound collecting units 85a and 85b is disposed on the end face in the -Y direction of the storage tank 54 in a state overlapping with at least a part of the rotary brush 58, when viewed from a direction in which the rotary brush 58 extends, that is from the -Y direction. That is, the sound collecting unit 85a is disposed facing the rotary brush 58. This makes it possible to easily detect an abnormal sound caused by deterioration of a tip portion of the rotary brush 58 or the like, and a reduction in cleaning performance for the transporting belt 23 due to deterioration of the rotary brush 58 or the like can be suitably detected.

Additionally, the sound collecting unit 85b on another side is disposed on the end face in the -Y direction of the storage tank 54 in a state overlapping with at least a part of the wiper unit 55, when viewed from a direction in which the wiper blade 55a extends, that is, from the -Y direction. That is, the sound collecting unit 85b is disposed at a position where a sound generated from the wiper blade 55a can be efficiently collected. Accordingly, a configuration can be employed in which an abnormal sound caused by wear of the wiper blade 55a or the like can be detected, and thus a reduction in cleaning performance for the transporting belt 23 by the wiper blade 55a can be suitably detected. Also, a state of tension of the transporting belt 23 can be easily detected from a sound collected from the wiper blade 55a.

Note that, similar to the above, the two sound collecting units 85 (85a, 85b) may also be disposed at the end face in the +Y direction of the storage tank 54. As a result, an abnormal sound according to the rotary brush 58 or the wiper blade 55a can be detected more efficiently.

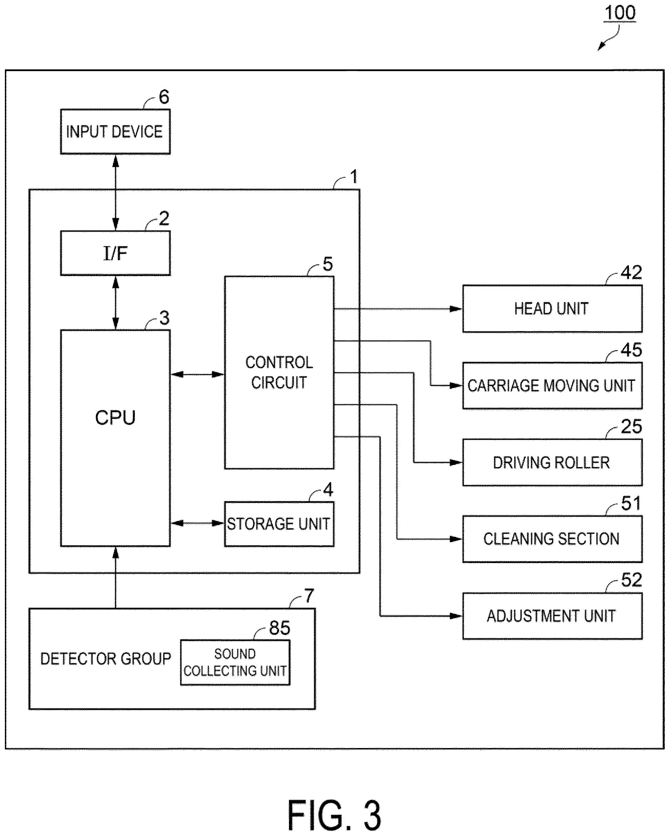

As illustrated in FIG. 3, the liquid ejecting device 100 includes an input device 6 in which recording conditions and the like are input, and the control unit 1 that controls each unit of the liquid ejecting device 100. Examples of the input device 6 include various personal computers, a tablet-type terminal, and a portable-type terminal. Note that, the input device 6 may be provided independently from the liquid ejecting device 100.

The control unit 1 includes an interface unit (I/F) 2, a Central Processing Unit (CPU) 3, a storage unit 4, and a control circuit 5. The interface unit 2 transmits/receives data between the input device 6 configured to handle input signals or images and the control unit 1.

The CPU 3 is an arithmetic processing unit configured to process input signals from various detector groups 7 including the sound collecting unit 85 and to control recording operation of the liquid ejecting device 100. For example, the CPU 3 performs operations for performing control of the liquid ejecting device 100 based on sound data input from the sound collecting unit 85.

The storage unit 4, which serves as a storage medium that ensures an area for storing the programs, a work area, and the like of the CPU 3, includes a storage device such as a Random Access Memory (RAM), an Electrically Erasable Programmable Read Only Memory (EEPROM), or the like.

The control unit 1 controls driving of an ejecting head included in the head unit 42 in accordance with the control signals output from the control circuit 5 to cause ink to be ejected onto the medium M. The control unit 1 controls driving of a motor provided in the carriage moving unit 45 in accordance with the control signals output from the control circuit 5 to cause the carriage 43 at which the head unit 42 is installed to reciprocate in the Y direction, that is in a main scanning direction. The control unit 1 controls driving of a motor provided in the driving roller 25 in accordance with the control signals output from the control circuit 5 to cause the transporting belt 23 to be rotated and moved. As a result, the medium M supported on the transporting belt 23 is moved in the transport direction (+X direction).

Images and the like are formed on the medium M by execution of the recording operation (intermittent operation) in which main scanning where the control unit 1 controls the carriage moving unit 45 and the head unit 42 to cause the head unit 42 (carriage 43) to be moved while causing the ejecting head to eject ink and sub-scanning where the control unit 1 controls the driving roller 25 to cause the medium M to be transported in the transport direction are alternately repeated.

The control unit 1 controls the cleaning section 51 in accordance with the control signals output from the control circuit 5, causes the rotary brush 58 and the blower unit 59 to drive and to clean the transporting belt 23. Further, the control unit 1 controls the adjustment unit 52 in accordance with the control signals output from the control circuit 5, and controls a load exerted by the cleaning section 51 on the transporting belt 23.

Next, a control method of the liquid ejecting device 100 will be described.

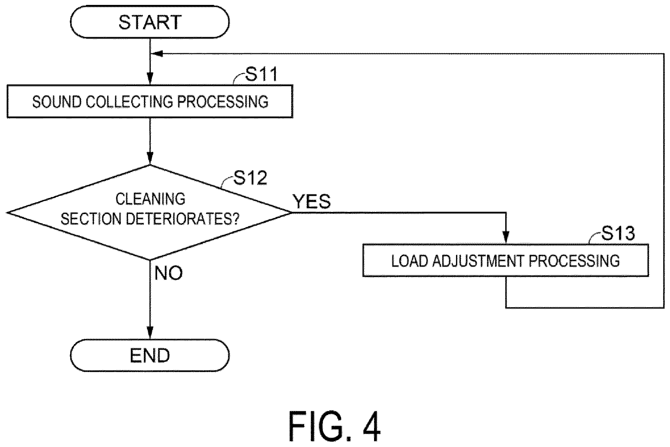

As illustrated in FIG. 4, in step S11, sound collecting processing is performed. Specifically, the control unit 1 acquires respective pieces of sound data detected by the sound collecting units 85a and 85b, and calculates an amplitude and frequency based on the respective pieces of sound data.

In step S12, the control unit 1 determines whether the cleaning section 51 deteriorates or not. That is, the control unit 1 determines whether an operation failure occurs in the cleaning section 51 or not. The deterioration of the cleaning section 51 is associated with the sound data. Specifically, the control unit 1 determines whether the amplitude and frequency based on the sound data of the sound collecting units 85 (85a, 85b) are within respective prescribed value ranges. A prescribed value is an amplitude or frequency when the cleaning section 51 is operating normally. That is, the prescribed value is an amplitude or frequency of a normal sound of the cleaning section 51 (sound when an abnormal sound is not generated). The prescribed values include an amplitude and a frequency of each of the wiper blade 55a, the rotary brush 58, and the blower unit 59. Each prescribed value is collected by the sound collecting unit 85 in advance, and an amplitude and a frequency based on the sound data are stored in the storage unit 4.

Then, when determining that the cleaning section 51 deteriorates (the amplitude or frequency based on the acquired sound data is not within the prescribed value range) (YES), the control unit 1 proceeds to step S13, and when determining that the cleaning section 51 does not deteriorate (the amplitude or frequency based on the acquired sound data is within the prescribed value range) (NO), the control unit 1 ends the processing.

For example, when, due to wear or deterioration of the rotary brush 58 or the wiper blade 55a, contact pressure with the transporting belt 23 weakens, a generated sound decreases. In this case, the amplitude decreases compared to the prescribed value. Accordingly, it can be determined that the rotary brush 58 or the wiper blade 55a deteriorates.

The sound collecting unit 85a is disposed near the rotary brush 58 and, in particular, collects a sound generated due to operation of the rotary brush 58. As a result, the control unit 1 can determine the deterioration or the like of the rotary brush 58, based on the sound data collected by the sound collecting unit 85a. Specifically, it is possible to determine deterioration of the tip portion of the rotary brush 58, abnormality of a drive mechanism of the rotary brush 58, a water shortage in the storage tank 54, or a state of generation of foam of the cleaning liquid in the storage tank 54.

Also, the sound collecting unit 85b is disposed near the wiper blade 55a, and, in particular, collects a sound generated by the wiper blade 55a. Accordingly, the control unit 1 can determine deterioration of the wiper blade 55a, and the like, based on the sound data collected from the sound collecting unit 85b. Specifically, deterioration of the wiper blade 55a, deterioration of the transporting belt 23, and a situation of deterioration of a state of the surface 23a of the transporting belt 23 can be determined.

Also, the sound collecting unit 85b can also collect a sound generated from the opening 59a of the blower unit 59. Accordingly, the control unit 1 can determine abnormality of the blower unit 59, based on sound data collected from the sound collecting unit 85b. Specifically, it is possible to determine presence or absence of, clogging of the opening 59a due to foreign matter, or foreign matter suction.

Note that in step S12, when the cleaning section 51 is determined to deteriorate, warning may be displayed on a display unit of the input device 6. Also, a warning sound may be generated. Thus, a user can easily recognize that abnormality occurs in operation of the cleaning section 51.

When the processing transits to step S13, load adjustment processing is performed. Specifically, the control unit 1 controls the adjustment unit 52 to cause a load exerted by the cleaning section 51 on the transporting belt 23 to be increased. Specifically, the control unit 1 causes the air cylinder 56 to drive and the cleaning section 51 to be raised. As a result, loads of the rotary brush 58 and the wiper blade 55a onto the transporting belt 23 are increased, and a reduction in cleaning performance due to deterioration of the cleaning section 51 can be automatically compensated.

Note that, in the present embodiment, in step S12, the control unit 1 uses the amplitude and frequency of a case where the cleaning section 51 is operating normally as the prescribed values, but the present disclosure is not limited thereto. The control unit 1 may use an amplitude and a frequency of a case where the cleaning section 51 is operating while generating an abnormal sound. In this case, for example, a sound of the case where the cleaning section 51 is operating while generating the abnormal sound is collected in advance, and an amplitude and a frequency based on sound data of the abnormal sound are stored in the storage unit 4.

Further, a configuration may be employed in which the prescribed value is stored in an external server device, rather than in the storage unit 4. In this case, the prescribed value is acquired by accessing the server device via the interface unit 2 of the control unit 1. In this manner, it is possible to reduce a load on the storage unit 4.

### 2. Second Embodiment

Next, a second embodiment will be described. In the present embodiment, another disposition example of the sound collecting units 85 will be described. Note that configurations identical to those in the first embodiment will be denoted by the same reference signs and redundant descriptions will be omitted.

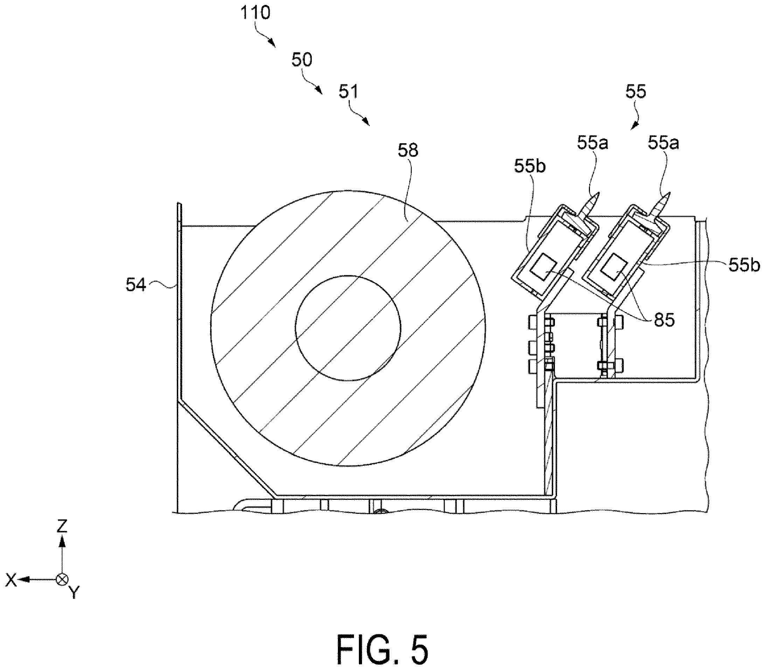

As illustrated in FIG. 5, the wiper unit 55 includes a hollow holding member 55b that holds the wiper blade 55a. In the present embodiment, the holding member 55b is disposed for each wiper blade 55a.

The holding member 55b extends in the Y direction, and is coupled to an inner surface of the storage tank 54 and is supported. A height of an upper end portion of the holding member 55b in the Z direction is approximately the same as a height of an upper end portion of the storage tank 54 in the Z direction. A dimension in the Y direction of the holding member 55b is substantially the same as a dimension in the Y direction of the wiper blade 55a, and the holding member 55b supports an entire bottom of the wiper blade 55a. The holding member 55b is made of sheet metal and has a rectangular outer shape when viewed in the +Y direction.

Furthermore, the sound collecting unit 85 is accommodated in an interior (hollow region) of the holding member 55b. A disposition position of the sound collecting unit 85 is not particularly limited, and may be disposed at a center portion in the Y direction of the holding member 55b, or may be disposed at an end portion. Also, the number of sound collecting units 85 installed is not particularly limited, and may be one, or multiple.

As described above, according to the present embodiment, by disposing the holding member 55b, the sound collecting unit 85 can be disposed at a position closer to the wiper blade 55a, and an abnormal sound of the wiper blade 55a can be easily detected. Furthermore, by the installation of the holding member 55b, it is possible to suppress application of the cleaning liquid to the sound collecting unit 85.

### 3. Other Embodiments

Hereinafter other disposition examples of the sound collecting units 85 will be described.

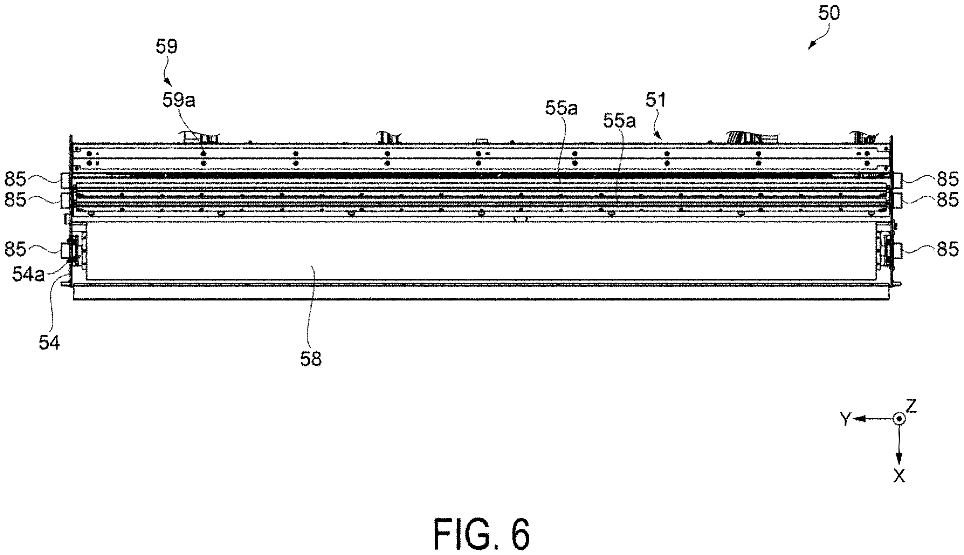

In the first embodiment, the two sound collecting units 85 are disposed at each of the end face in the +Y direction and the end face in the -Y direction of the storage tank 54, but the present disclosure is not limited to this configuration. For example, as illustrated in FIG. 6, the three sound collecting units 85 may be disposed at each of the end face in the +Y direction and the end face in the -Y direction of the storage tank 54.

In this case, of the three sound collecting units 85 disposed at each of the end face in the +Y direction and the end face in the -Y direction of the storage tank 54, the sound collecting unit 85 disposed at a position farthest in the +X direction is disposed at a position overlapping with at least a part of the rotary brush 58, when viewed from a direction in which the rotary brush 58 extends, that is, from the Y direction. Additionally, each of the remaining two sound collecting units 85 is disposed at a position overlapping with at least a part of the wiper unit 55, when viewed from a direction in which the wiper blade 55a extends, that is, from the Y direction.

As a result, an abnormal sound according to the rotary brush 58 or each wiper blade 55a can be detected efficiently.

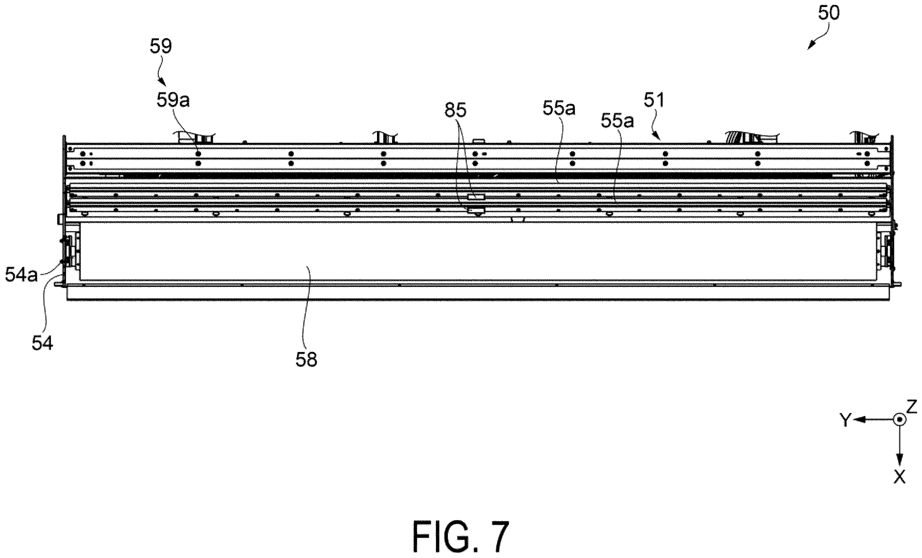

Also, as illustrated in FIG. 7, disposition may be made around a center in the Y direction of each wiper blade 55a. As a result, it is possible to specialize in collecting a sound generated when each wiper blade 55a and the transporting belt 23 come into contact, and an abnormal sound according to each wiper blade 55a can be detected more efficiently.

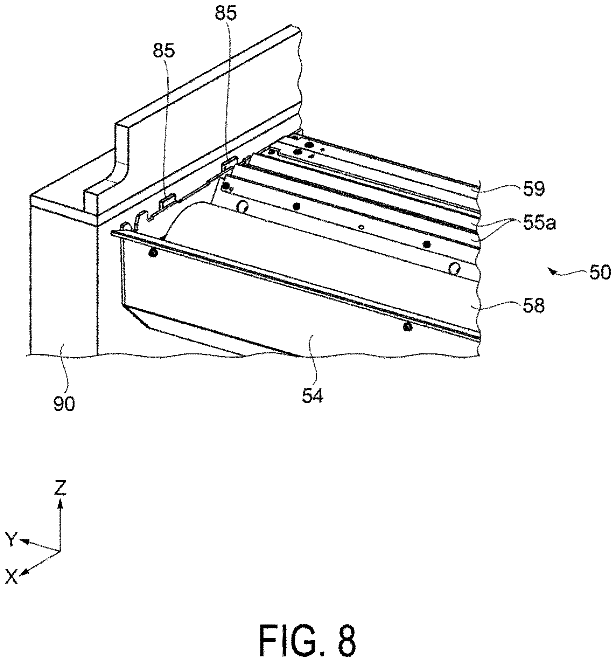

Additionally, as illustrated in FIG. 8, the sound collecting unit 85 may be disposed at a frame portion 90 disposed adjacent to the cleaning unit 50. In this case, for example, the sound collecting unit 85 is disposed at a location proximate to the rotary brush 58 or the wiper blade 55a. Even in this way, an abnormal sound regarding operation of the cleaning unit 50 can be detected.

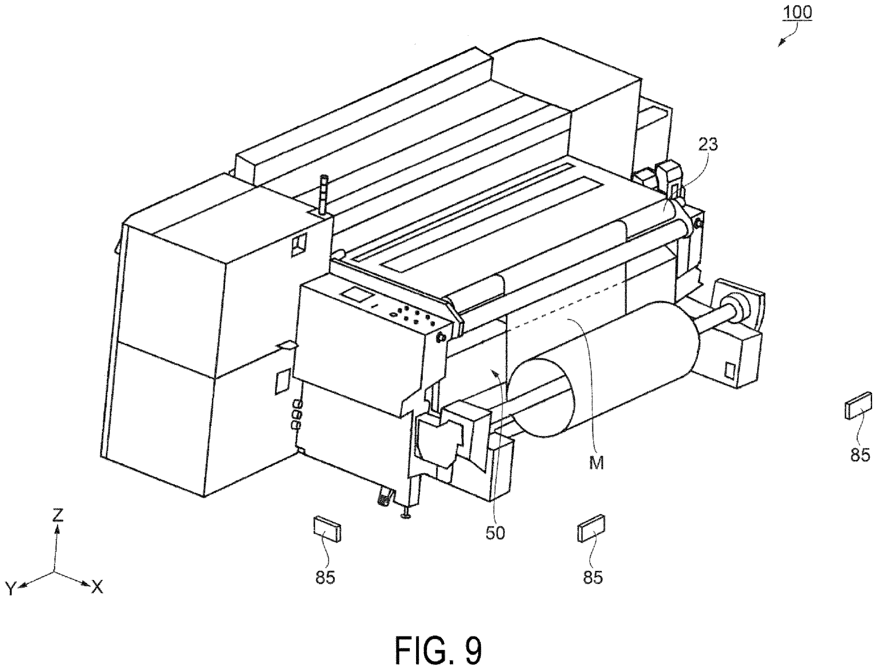

In addition, for example, when it is difficult to dispose the sound collecting unit 85 directly at the cleaning unit 50, the sound collecting unit 85 may be disposed around the liquid ejecting device 100 as illustrated in FIG. 9. Even in this way, an abnormal sound regarding operation of the cleaning unit 50 can be detected.

Note that, a configuration may be employed in which the dispositions of the sound collecting units 85 described in the first embodiment, the second embodiment, and the other embodiments described above may be combined as appropriate.

In the above-described embodiment, in the liquid ejecting device 100, a failure of the cleaning unit 50 is detected based on sound data detected by the sound collecting unit 85 disposed in the cleaning unit 50, but the present disclosure is not limited thereto. In addition to sound data by the sound collecting unit 85, various types of printing setting information of the liquid ejecting device 100 (for example, ON/OFF information of the IR heater of the drying unit 27, information of a load exerted by the cleaning section 51 on the transporting belt 23 by the adjustment unit 52, type information of ink ejected from the head unit 42, and the like), printing image information (for example, a width dimension of the medium M, transport speed information of the medium M by the medium transporting unit 20, printing DUTY information, and the like), internal information of the liquid ejecting device 100 (for example, temperature information for each location of the liquid ejecting device 100, an operation time of the liquid ejecting device 100, and the like) may be used in combination. Furthermore, information related to the transporting belt 23 (for example, adhesive force information of the adhesive layer 29, tension information of the transporting belt 23) may be employed. This makes it possible to further increase accuracy of detecting a failure of the cleaning unit 50.

Additionally, an acceleration sensor may be used in addition to the sound collecting unit 85. Accordingly, in addition to sound data, motion information, vibration information, and impact information of each unit can be obtained, and thus accuracy of detecting a failure of the cleaning unit 50 can be increased.

In the embodiment described above, the configuration is employed in which the sound collecting unit 85 is fixedly disposed at a predetermined position, but the present disclosure is not limited thereto. The sound collecting unit 85 may be configured to be movable to any position. Further, for example, a configuration may be employed in which a microphone function of a portable mobile terminal (a mobile phone, a smart phone, or the like) is utilized. In this case, the mobile terminal transmits sound data via the interface unit 2 of the control unit 1. In this way, sound data at a desired position can be easily acquired. Note that, the input device 6 may also serve as the above mobile terminal.

In the above-described embodiment, one sound collecting unit 85 of the plurality of sound collecting units 85 is disposed facing the rotary brush 58, by being fixed to the end face in the Y direction of the storage tank 54 in a state overlapping with at least a part of the rotary brush 58, when viewed from the direction in which the rotary brush 58 extends. However, the present disclosure is not limited thereto. One sound collecting unit 85 of the plurality of sound collecting units 85 may be disposed at a position in the +Z direction with respect to the rotary brush 58, for example, and is disposed at a position off from the end face in the Y direction of the storage tank 54, and an inclination of the sound collecting unit 85 may be appropriately set. At this time, similarly to the above-described embodiment, the number of the one sound collecting units 85 may be two or more.

In addition, the other sound collecting unit 85 of the plurality of sound collecting units 85 is disposed facing the wiper unit 55 by being fixed to the end face in the Y direction of the storage tank 54 in a state overlapping with at least a part of the wiper unit 55, when viewed from the direction in which the wiper blade 55a extends. However, the present disclosure is not limited thereto. The other sound collecting unit 85 of the plurality of sound collecting units 85 may be disposed at a position in the +Z direction with respect to the wiper blade 55a or the wiper unit 55, for example, and is disposed at a position off from the end face in the Y direction of the storage tank 54, and an inclination of the sound collecting unit 85 may be appropriately set. At this time, similarly to the above-described embodiment, the number of the other sound collecting units 85 may be two or more.

That is, a position at which at least one sound collecting unit 85 is disposed or a location to which the at least one sound collecting unit 85 is fixed is not particularly limited as long as at least a sound from the cleaning section 51 can be collected.

Note that in the above-described embodiment, although the description has been given using, as the example, the configuration of the liquid ejecting device 100 provided with the transport device 110, the present disclosure is not limited thereto, and a configuration only with the transport device 110 may be employed. That is, the transport device 110 includes the transporting belt 23, the cleaning unit 50, and the sound collecting unit 85. Even with this configuration, similar advantages as described above can be obtained.

A transport device includes a transporting belt capable of transporting a medium, a cleaning unit capable of cleaning the transporting belt with liquid, and a sound collecting unit configured to collect a sound generated by operation of the cleaning unit.

According to this configuration, it is possible to detect an abnormal sound due to malfunction of the cleaning unit, or the like, and occurrence of a cleaning failure of the transporting belt by the cleaning unit can be detected.

The cleaning unit of the transport device described above includes a cleaning section capable of cleaning the transporting belt in contact with the transporting belt, and the sound collecting unit may collect a sound generated from the cleaning section.

According to this configuration, it is possible to detect an abnormal sound caused by deterioration of the cleaning section, and a reduction in cleaning performance for the transporting belt by the cleaning section can be suitably detected.

The cleaning section of the transport device described above is a wiper unit including a wiper blade capable of wiping the liquid adhering to the transporting belt by contacting the transporting belt, and the sound collecting unit may collect a sound generated from the wiper unit.

According to this configuration, a configuration can be employed in which an abnormal sound caused by wear of the wiper blade can be detected, and thus a reduction in cleaning performance for the transporting belt due to wear of the wiper blade can be suitably detected.

The wiper unit of the above-mentioned transport device may include a hollow holding member for holding the wiper blade, and the sound collecting unit may be accommodated inside the holding member.

According to this configuration, the holding member can also be used as a member for suppressing application of liquid to the sound collecting unit.

The cleaning unit of the above-described transport device may include a storage tank in which the liquid is stored, and the cleaning section may be a rotary brush partially immersed in the liquid stored in the storage tank, and capable of cleaning the transporting belt while rotating, and the sound collecting unit may be disposed facing the rotary brush.

According to this configuration, a configuration can be employed in which an abnormal sound caused by deterioration of a tip portion of the rotary brush can be detected, and thus a reduction in cleaning performance for the transporting belt due to deterioration of the rotary brush can be suitably detected.

The transport device described above may include an adjustment unit capable of adjusting a load exerted by the cleaning section on the transporting belt, and a control unit configured to control the adjustment unit, and the control unit, when determining that the cleaning section deteriorates based on a sound collection result of the sound collecting unit, may control the adjustment unit to increase the load.

According to this configuration, it is possible to automatically compensate for a reduction in cleaning performance associated with deterioration of the cleaning section.

A liquid ejecting device includes an ejecting unit capable of ejecting a liquid droplet onto a medium, a transporting belt capable of transporting the medium, a cleaning unit capable of cleaning the transporting belt with liquid, and a sound collecting unit configured to collect a sound generated by operation of the cleaning unit.

According to this configuration, it is possible to detect an abnormal sound due to malfunction of the cleaning unit, or the like, and occurrence of a cleaning failure of the transporting belt by the cleaning unit can be detected.

## Claims

1. A transport device (110), comprising:
a transporting belt (23) configured to transport a medium;
a cleaning unit (50) configured to clean the transporting belt with liquid, the cleaning unit including a cleaning section (51) configured to clean the transporting belt by contacting the transporting belt;
a sound collecting unit (85) configured to collect a sound generated by operation of the cleaning unit and generated from the cleaning section, and a control unit (1) configured to collect a sound collection result of the sound collecting unit,
wherein
either:
the cleaning section is a wiper unit (55) including a wiper blade (55a) configured to wipe the liquid adhering to the transporting belt by contacting the transporting belt,
the sound collecting unit is configured to collect a sound generated from the wiper unit,
the wiper unit includes a hollow holding member (55b) for holding the wiper blade, and
the sound collecting unit is accommodated inside the holding member,
or
the cleaning unit (50) includes a storage tank (54) in which the liquid is stored,
the cleaning section is a rotary brush (58) partially immersed in the liquid stored in the storage tank, and configured to clean the transporting belt (23) while rotating, the sound collecting unit is configured to collect a sound generated from the rotary brush, and
the sound collecting unit (85) is disposed facing the rotary brush.

2. The transport device (110) according to claim 1, comprising:
an adjustment unit (52) configured to adjust a load exerted by the cleaning section (51) on the transporting belt (23); and
a control unit (1) configured to control the adjustment unit, wherein
the control unit is configured to determine whether or not the cleaning section (51) has deteriorated based on a sound collection result of the sound collecting unit (85), and when the control unit (1) determines that the cleaning section has deteriorated, the control unit is configured to control the adjustment unit (52) to increase the load.

3. A liquid ejecting device (100), comprising:
an ejecting unit (40) configured to eject a liquid droplet onto a medium; and
a transporting device (110) according to claim 1 or claim 2, comprising a transporting belt (23) configured to transport the medium.

## Patentansprüche

1. Transportvorrichtung (110), umfassend:
ein Transportband (23), das eingerichtet ist, ein Medium zu transportieren;
eine Reinigungseinheit (50), die eingerichtet ist, das Transportband mit Flüssigkeit zu reinigen, wobei die Reinigungseinheit einen Reinigungsabschnitt (51) enthält, der eingerichtet ist, das Transportband durch Kontaktieren des Transportbands zu reinigen;
eine Schallaufnahmeeinheit (85), die eingerichtet ist, einen Schall aufzunehmen, der durch Betrieb der Reinigungseinheit erzeugt wird und von dem Reinigungsabschnitt erzeugt wird, und
eine Steuereinheit (1), die eingerichtet ist, ein Schallaufnahmeergebnis der Schallaufnahmeeinheit aufzunehmen,
wobei
entweder:
der Reinigungsabschnitt eine Wischeinheit (55) ist, die ein Wischblatt (55a) enthält, das eingerichtet ist, die Flüssigkeit, die an dem Transportband haftet, durch Kontakt mit dem Transportband abzuwischen,
die Schallaufnahmeeinheit eingerichtet ist, einen Schall, der von der Wischeinheit erzeugt wird, aufzunehmen,
die Wischeinheit ein hohles Halteelement (55b) zum Halten des Wischblatts enthält, und
die Schallaufnahmeeinheit im Inneren des Halteelements untergebracht ist,
oder
die Reinigungseinheit (50) einen Lagerungstank (54) enthält, in dem die Flüssigkeit gelagert ist,
der Reinigungsabschnitt eine drehende Bürste (58) ist, die teilweise in die Flüssigkeit eingetaucht ist, die in dem Lagerungstank gelagert ist, und eingerichtet ist, das Transportband (23) während sie dreht zu reinigen,
die Schallaufnahmeeinheit eingerichtet ist, einen Schall aufzunehmen, der von der drehenden Bürste erzeugt wird, und
die Schallaufnahmeeinheit (85) der drehenden Bürste zugewandt angeordnet ist.

2. Transportvorrichtung (110) nach Anspruch 1, umfassend:
eine Einstellungseinheit (52), die eingerichtet ist, eine Last, die von dem Reinigungsabschnitt (51) auf das Transportband (23) ausgeübt wird, einzustellen; und
eine Steuereinheit (1), die eingerichtet ist, die Einstellungseinheit zu steuern, wobei
die Steuereinheit eingerichtet ist, basierend auf einem Schallaufnahmeergebnis der Schallaufnahmeeinheit (85) zu bestimmen, ob der Reinigungsabschnitt (51) sich verschlechtert hat oder nicht, und wenn die Steuereinheit (1) bestimmt, dass sich der Reinigungsabschnitt verschlechtert hat, die Steuereinheit eingerichtet ist, die Einstellungseinheit (52) zu steuern, die Last zu erhöhen.

3. Flüssigkeitsausstoßvorrichtung (100), umfassend:
eine Ausstoßeinheit (40), die eingerichtet ist, ein Flüssigkeitströpfchen auf ein Medium auszustoßen; und
eine Transportvorrichtung (110) nach Anspruch 1 oder Anspruch 2, die ein Transportband (23) umfasst, das eingerichtet ist, das Medium zu transportieren.

## Revendications

1. Dispositif de transport (110), comprenant :
une courroie de transport (23) configurée pour transporter un support ;
une unité de nettoyage (50) configurée pour nettoyer la courroie de transport avec du liquide, l'unité de nettoyage incluant une section de nettoyage (51) configurée pour nettoyer la courroie de transport en venant en contact avec la courroie de transport ;
une unité de collecte de son (85) configurée pour collecter un son généré par le fonctionnement de l'unité de nettoyage et généré à partir de la section de nettoyage, et
une unité de commande (1) configurée pour collecter un résultat de collecte de son de l'unité de collecte de son,
dans lequel
soit :
la section de nettoyage est une unité d'essuyage (55) incluant une lame d'essuyage (55a) configurée pour essuyer le liquide adhérant à la courroie de transport en venant en contact avec la courroie de transport,
l'unité de collecte de son est configurée pour collecter un son généré à partir de l'unité d'essuyage,
l'unité d'essuyage inclut un élément de maintien creux (55b) destiné à maintenir la lame d'essuyage, et l'unité de collecte de son est reçue dans l'élément de maintien,
ou
l'unité de nettoyage (50) inclut un récipient de stockage (54) dans lequel est stocké le liquide,
la section de nettoyage est une brosse rotative (58) partiellement immergée dans le liquide stocké dans le récipient de stockage, et configurée pour nettoyer la courroie de transport (23) pendant la rotation, l'unité de collecte de son est configurée pour collecter un son généré à partir de la brosse rotative, et
l'unité de collecte de son (85) est disposée en face de la brosse rotative.

2. Dispositif de transport (110) selon la revendication 1, comprenant :
une unité de réglage (52) configurée pour régler une charge exercée par la section de nettoyage (51) sur la courroie de transport (23) ; et
une unité de commande (1) configurée pour commander l'unité de réglage, dans lequel
l'unité de commande est configurée pour déterminer si la section de nettoyage (51) a été endommagée ou non, sur la base d'un résultat de collecte de son de l'unité de collecte de son (85), et lorsque l'unité de commande (1) détermine que la section de nettoyage est endommagée, l'unité de commande est configurée pour commander l'unité de réglage (52) de manière à augmenter la charge.

3. Dispositif d'éjection de liquide (100), comprenant :
une unité d'éjection (40) configurée pour éjecter une goutte de liquide sur un support ; et
un dispositif de transport (110) selon la revendication 1 ou la revendication 2, comprenant une courroie de transport (23) configurée pour transporter le support.
